# FASCICULE DE BREVET EUROPEEN

(11) **EP 2 759 103 B1**
(45) Date de publication et mention de la délivrance du brevet: **21.06.2017**
(21) Numéro de dépôt: 12759759.9
(22) Date de dépôt: 20.09.2012
(51) Int. Cl.: H04L 12/751, H04L 29/06

(54) **DISPOSITIF ET PROCEDE D'ACHEMINEMENT DE FLUX DE COMMUNICATION SECURISES ENTRE SITES DISTANTS**
VORRICHTUNG UND VERFAHREN ZUM ROUTEN SICHERER KOMMUNIKATIONSSTRÖME ZWISCHEN ENTFERNTEN ORTEN
DEVICE AND METHOD FOR ROUTING SECURE COMMUNICATION STREAMS BETWEEN REMOTE SITES

(30) Priorité: 23.09.2011 FR 1102891
(43) Date de publication de la demande: 30.07.2014
(73) Titulaire: THALES, 92400 Courbevoie (FR)
(72) Inventeur: BOUET, Mathieu, F-92622 Gennevilliers Cedex (FR); NGUENGANG-FANMEGNE, Gérard, F-92622 Gennevilliers Cedex (FR); BOITE, Julien, F-92622 Gennevilliers Cedex (FR)
(74) Mandataire: HAMMES, Pierre
(86) Numéro de dépôt international: PCT/EP2012/068567
(87) Numéro de publication internationale: WO 2013/041638

(56) Documents cités:
- FANG L ET AL: "Security Framework for MPLS and GMPLS Networks; rfc5920.txt", SECURITY FRAMEWORK FOR MPLS AND GMPLS NETWORKS; RFC5920.TXT, INTERNET ENGINEERING TASK FORCE, IETF; STANDARD, INTERNET SOCIETY (ISOC) 4, RUE DES FALAISES CH- 1205 GENEVA, SWITZERLAND, 10 juillet 2010 (2010-07-10), pages 1-66, XP015070860,
- ROSEN CISCO SYSTEMS E ET AL: "Multiprotocol Label Switching Architecture; rfc3031.txt", 20010101, 1 janvier 2001 (2001-01-01), XP015008814, ISSN: 0000-0003
- KENT K SEO BBN TECHNOLOGIES S: "Security Architecture for the Internet Protocol; rfc4301.txt", 20051201, 1 décembre 2005 (2005-12-01), XP015043220, ISSN: 0000-0003
- AMANTE LEVEL 3 B CARPENTER UNIV OF AUCKLAND S JIANG HUAWEI TECHNOLOGIES CO S ET AL: "IPv6 Flow Label Specification; draft-ietf-6man-flow-3697bis-07.txt", IPV6 FLOW LABEL SPECIFICATION; DRAFT-IETF-6MAN-FLOW-3697BIS-07.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 7, 29 juillet 2011 (2011-07-29), pages 1-17, XP015077523, [extrait le 2011-07-29]

## Description

La présente invention a pour objet un dispositif et un procédé d'acheminement, entre des sites distants, de flux de communication sécurisés soumis à des contraintes de diffusion.

L'invention concerne le domaine des architectures de réseaux, et notamment les réseaux nécessitant une sécurisation des flux échangés entre les différentes entités qui les composent.

L'invention concerne plus précisément les architectures composées d'une pluralité de réseaux locaux distants, ou réseaux LAN (Local Area Network), interconnectés par le biais d'une pluralité de réseaux étendus, ou réseaux WAN (Wide Area Network), encore appelés réseaux d'infrastructure. Chaque réseau local peut être connecté à un ou plusieurs réseaux étendus par un ou plusieurs liens de connexion. De plus, la communication entre réseaux locaux doit être sécurisée.

Dans une telle architecture, les réseaux locaux constituent des enclaves au sens où les flux sortant de chacune de ces enclaves sont sécurisés. Les enclaves ne peuvent communiquer entre elles que par l'intermédiaire d'un réseau étendu, par exemple un réseau public Internet géré par un fournisseur d'accès. Un réseau étendu constitue un réseau de transport pour les enclaves au sens où il fournit un accès au médium de communication et un service de transport des paquets permettant d'assurer une connectivité entre enclaves distantes.

L'accès, pour un réseau local donné, à plusieurs réseaux de transport redondants permet d'accroître la fiabilité des communications. Cette multiplicité de l'accès à des réseaux de transport, qu'il s'agisse de plusieurs liens vers des réseaux WAN différents ou de plusieurs liens vers un même réseau WAN, constitue une technique communément désignée par le terme anglais « multihoming ».

Dans une architecture réseau de ce type, il est possible et souhaitable de mettre en oeuvre une politique de qualité de service permettant d'associer à un flux de données à transmettre le lien de communication le plus adapté à ses besoins et contraintes.

L'invention trouve application notamment pour les architectures de réseau mettant en oeuvre la technique dite de « multihoming ». L'invention s'applique en particulier aux réseaux IP.

Un problème technique général associé aux réseaux de ce type est le routage et l'acheminement des flux de données entre enclaves distantes de façon à respecter les contraintes de diffusion associées à chacun d'eux.

Ce problème est d'autant plus complexe lorsque les données communiquées entre deux enclaves ne doivent pas être transmises en clair à travers les réseaux de transport pour des raisons de confidentialité, et que la capacité des différents réseaux de transport à satisfaire telle ou telle contrainte est méconnue. En effet, les informations concernant les caractéristiques des liens de communication qu'un réseau d'infrastructure fournit ne sont pas rendues disponibles aux enclaves qu'il dessert.

Pour répondre à la contrainte de confidentialité, un cloisonnement logique du réseau est réalisé par l'introduction d'un dispositif de chiffrement des flux à l'interconnexion entre chaque réseau LAN enclavé et le(s) réseau(x) WAN. On parle communément de partie rouge pour désigner la zone du réseau où les données sont manipulées en clair et les décisions, notamment de routage et d'acheminement, sont prises. Au contraire, la partie noire désigne la zone du réseau où les données sont chiffrées. Les réseaux locaux sont situés dans la partie rouge du réseau et les réseaux de transport sont situés dans la partie noire du réseau. Les flux émis depuis une enclave source sont ainsi chiffrés par un dispositif de chiffrement avant de traverser un réseau de transport, puis déchiffrés au niveau de l'enclave destination.

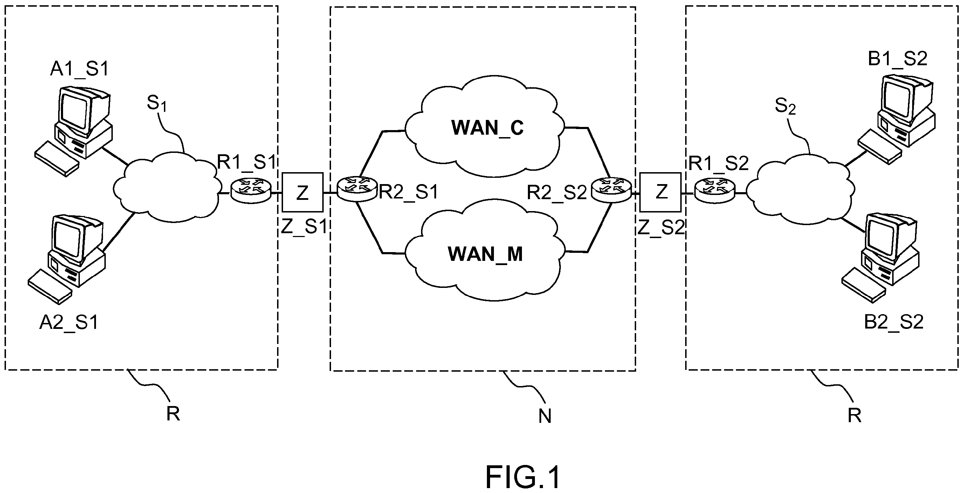

Un exemple d'architecture de réseau pour lequel l'invention trouve son application est représenté à la figure 1.

Deux réseaux locaux distants S1 et S2 sont interconnectés par l'intermédiaire de deux réseaux de transport WAN_M et WAN_C. Les usagers A1_S1,A2_S1 du premier réseau local S1 communiquent avec les usagers B1_S2,B2_S2 du second réseau local S2. Afin de cloisonner les flux entre les parties rouge R et noire N du réseau, un dispositif de chiffrement Z_S1,Z_S2 est disposé entre chaque réseau local S1,S2 et les réseaux de transport auquel il est connecté. Des dispositifs de routage R1_S1,R1_S2 sont situés du côté des réseaux locaux, dans la partie rouge, afin de mettre en oeuvre les décisions de choix des chemins permettant d'acheminer un flux transmis depuis le premier réseau local S1 vers le second réseau local S2. Dans la partie noire, de l'autre coté des dispositifs de chiffrement Z_S1,Z_S2, des dispositifs de routage R2_S1,R2_S2 sont utilisés pour sélectionner la sortie associée au lien de transmission choisi pour transmettre les paquets.

L'exemple de la figure 1 se limite à deux enclaves directement connectées par le biais de deux réseaux de transport, mais l'invention ne se limite pas à cet exemple. D'avantage de réseaux de transport peuvent être disponibles. Les liens de connexion entre réseaux locaux et réseaux de transport peuvent être de types différents, par exemple liaison ADSL, satellite ou liaison sans fil.

Il est également possible que deux enclaves désirant communiquer ne soient pas directement connectées, ou que cette connexion directe ne satisfasse pas ou plus les contraintes imposées. Dans ce cas, la communication entre les deux enclaves distantes ne peut se faire, dans les conditions attendues, qu'en passant par une ou plusieurs enclaves intermédiaires.

Un problème existe donc pour acheminer les flux de données entre enclaves distantes, en prenant en compte les contraintes de qualité de service des flux et les caractéristiques des liens de transmission, lorsque les flux transmis à travers les réseaux de transport doivent être chiffrés ou sécurisés.

Les solutions connues permettant de mettre en oeuvre des méthodes de routage pour des réseaux tels que décrit ci-dessus sont plurales.

La publication [1] concerne les techniques dites de « multihoming ». Dans cet article, les auteurs démontrent les bénéfices que l'exploitation de multiples moyens de connectivité peut apporter en termes de performances. La problématique du choix du lien de sortie d'une enclave en fonction de différents critères de performance des liens et des caractéristiques des flux transmis est introduite. La diversité des liens peut provenir d'un unique opérateur ou de plusieurs opérateurs différents. Cependant, le choix du lien de sortie au niveau d'une enclave source ne permet pas, à lui seul, de mettre en oeuvre une stratégie de routage via une enclave intermédiaire pour joindre une enclave destination indirectement connectée. Pour ce faire il est nécessaire de pouvoir contrôler non seulement le lien de sortie, mais aussi tous les suivants, et ainsi mettre en place un chemin complet.

Dans la publication [2], les auteurs proposent des mécanismes pour mettre en place un réseau logique de type « overlay » et assurer le routage de flux non chiffrés entre les noeuds qui le composent. Le terme « overlay » désigne une topologie de réseau construite à partir de liens logiques entre les noeuds de ce réseau. Un lien logique correspond à un chemin d'accès possible entre deux noeuds et est différent d'un lien physique de transmission entre deux noeuds. En particulier, un lien logique peut consister en l'agrégation de plusieurs liens physiques contigus. Le mécanisme de routage proposé permet de court-circuiter le routage standard utilisé dans un réseau tel que l'Internet afin d'améliorer les performances et d'assurer une meilleure résilience en cas de problème. Cependant, de tels mécanismes requièrent que les noeuds communiquent entre eux afin de maintenir le réseau logique et d'échanger des informations de performances sur les liens logiques.

Les deux références précitées ne prennent pas en compte les contraintes liées au chiffrement des flux transmis entre enclaves distantes et ne proposent pas de mécanisme permettant l'acheminement de communications sécurisées. Les méthodes de routage proposées ne peuvent pas fonctionner pour des flux chiffrés sans qu'un mécanisme ne permette de piloter le plan de contrôle de la partie noire afin d'assurer l'acheminement de ces communications vers les noeuds du réseau logique auxquels elles sont destinées.

En outre la référence [1] ne permet pas d'assurer un acheminement entre enclaves distantes en passant par une ou plusieurs enclaves intermédiaires.

On connaît également la demande de brevet française du demandeur déposée sous le numéro 1005089.

Cette demande porte notamment sur un système de gestion de flux sécurisés entre deux enclaves interconnectées via plusieurs réseaux de transport. L'invention décrite permet d'apporter une première solution au problème d'acheminement de flux chiffrés mais présente certaines limitations. Elle présuppose notamment la mise en oeuvre d'un maillage complet entre les enclaves susceptibles de communiquer. De ce fait, les fonctionnalités proposées ne peuvent pas s'appliquer dans le cas où deux enclaves, source et destination, ne sont pas directement interconnectées par au moins un réseau de transport.

Ce cas de figure est susceptible d'apparaître pour plusieurs raisons. L'optimisation des coûts peut justifier de tels choix d'architecture, mais cette situation peut aussi se produire lorsqu'une ou plusieurs liaison(s) existante(s) ne permettent pas (ou plus) d'acheminer les flux dans les conditions attendues, par exemple pour des problèmes de perte de connectivité, ou de dégradation des caractéristiques de qualité de service. Les mécanismes proposés dans cette demande de brevet ne supportent donc pas d'éventuelles défaillances des liens causées par une rupture de connectivité, une erreur de configuration, ou une dégradation des performances sur un chemin initialement sélectionné.

On connait également le mécanisme de transport de données MPLS (« MultiProtocol Label Switching ») basé sur l'utilisation de labels ou étiquettes pour élaborer des décisions d'acheminement dans un réseau de communication. Ce mécanisme est notamment décrit dans le document RFC5920 du comité de normalisation IETF.

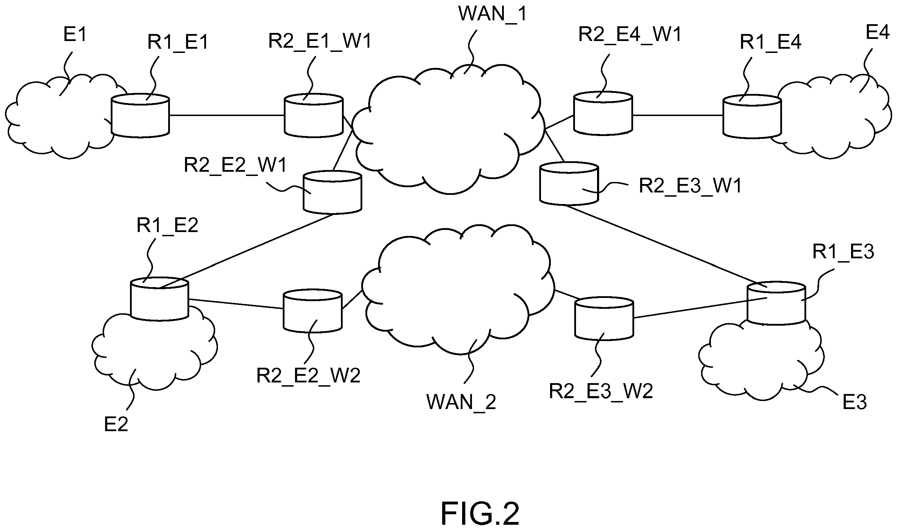

La figure 2 illustre, sur un exemple, une architecture de réseau adaptée à l'emploi du mécanisme MPLS pour l'acheminement de flux sécurisés.

Plusieurs réseaux locaux enclavés E1,E2,E3,E4 sont interconnectés par le biais de plusieurs réseaux de transport WAN_1,WAN2. Pour assurer la confidentialité des flux de données acheminés au travers des réseaux de transport, ceux-ci sont chiffrés dès la sortie d'un réseau local enclavé via un mécanisme de chiffrement.

Chaque réseau local enclavé comporte un premier dispositif de routage R1_E1,R1_E2,R1_E3,R1_E4 apte à élaborer des décisions d'acheminement des flux en provenance de l'enclave à laquelle il est rattaché et à destination d'une autre enclave. Le premier dispositif de routage reçoit les flux de données en clair, il est situé dans la partie logique rouge du réseau.

Chaque réseau local enclavé est aussi associé à un second dispositif de routage, pour chaque réseau de transport auquel il est connecté. Ainsi les réseaux enclavés E2 et E3 sont reliés chacun à deux dispositifs de routage R2_E2_W1, R2_E2_W2, R2_E3_W1,R2_E3_W2 qui permettent l'aiguillage des flux chiffrés à travers les réseaux de transport WAN_1,WAN2.

Les seconds dispositifs de routage reçoivent les flux chiffrés, ils sont situés dans la partie logique noire du réseau.

Dans un réseau tel que celui de la figure 2, il existe, pour des raisons de sécurité, un premier plan de routage pour les dispositifs de routage de la partie rouge du réseau et un second plan de routage pour les dispositifs de routage de la partie noire du réseau.

Pour sécuriser les communications entre les dispositifs de routage R1_E1,R1_E2,R1_E3,R1_E4 de la partie logique rouge du réseau, il est nécessaire d'établir des tunnels sécurisés entre chaque dispositif source et chaque dispositif destination et cela au travers des différents réseaux de transport. Le protocole IPSec, décrit notamment dans le standard de l'IETF référencé sous le numéro RFC 4301,est un moyen d'établir de tels tunnels sécurisés. Ces tunnels sécurisés ne peuvent être établis qu'entre deux extrémités d'une liaison point à point. En pratique les paquets sont chiffrés au niveau de la partie rouge d'un réseau local enclavé puis le tunnel chiffré repose sur le dispositif de routage de la partie noire et son homologue rattaché au réseau local enclavé destination.

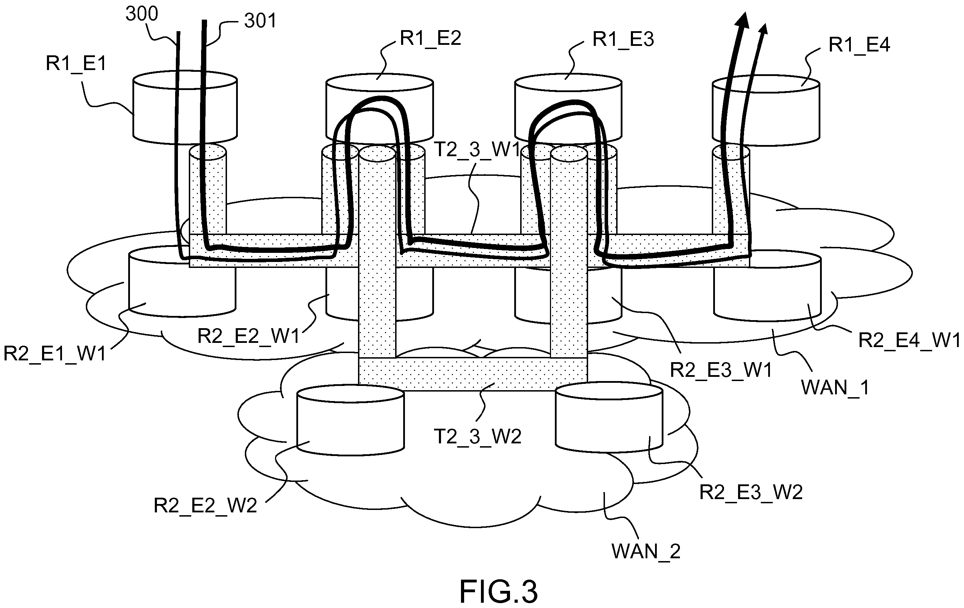

La figure 3 illustre l'établissement de tunnels sécurisés pour la communication entre les différents réseaux enclavés.

Pour les réseaux enclavés E2,E3 qui sont reliés à au moins deux réseaux de transport différents WAN_1,WAN_2, deux tunnels sécurisés doivent être établis. Le premier tunnel sécurisé T2_3_W1 est établi à travers le premier réseau de transport WAN_1 au travers des dispositifs de routage R2_E2_W1,R2_E3_W1 associés de la partie logique noire du réseau. Le second tunnel sécurisé T2_3_W2 est établi à travers le second réseau de transport WAN_2 au travers des dispositifs de routage R2_E2_W2,R2_E3_W2 associés de la partie logique noire du réseau.

Le plan de routage de la partie logique noire du réseau permet de définir le chemin emprunté par les paquets transmis à travers les tunnels sécurisés. Ce plan de routage permet l'acheminement des paquets de données chiffrés entre les dispositifs de routage de la partie logique rouge associés aux enclaves source et destination.

Ainsi, le mécanisme MPLS nécessite l'emploi de tunnels de chiffrements pour chaque réseau de transport.

En outre, lorsque le chemin sélectionné pour acheminer un flux sécurisé d'une enclave source vers une enclave destination emprunte d'autres enclaves intermédiaires, l'utilisation du mécanisme MPLS associé à un protocole de chiffrement, nécessite le déchiffrement des paquets à chaque enclave intermédiaire car le routage est élaboré dans la partie rouge du réseau.

Par exemple, si un flux de données 300 doit être acheminé de l'enclave source E1 à l'enclave destination E4 en passant par les enclaves intermédiaires E2,E3, ce flux traverse plusieurs tunnels sécurisés successifs entre chaque paire d'enclaves. A chaque enclave intermédiaire, le flux est déchiffré et remonté dans la partie rouge du réseau pour extraire les informations en clair nécessaire au routage.

En effet, les dispositifs de routage de la partie rouge du réseau, qui sont émetteurs de flux de communications prennent des décisions d'acheminement sur la base des informations contenues dans les paquets avant chiffrement. Ils mettent en place l'acheminement adéquat dans le plan de routage rouge par le biais de la signalisation 301 et envoient les paquets à travers le tunnel sécurisé choisi. Le flux de signalisation 301 du plan de routage rouge et les communications sont chiffrés car ils empruntent des tunnels sécurisés. Mais du fait de l'isolation entre les plans de routage rouge et noir, imposée par la sécurisation des flux, seul le plan de routage rouge est capable de traiter l'acheminement de ces communications. Un rebond sur une enclave intermédiaire se manifeste donc par une remontée des paquets au niveau du dispositif de routage de la partie rouge, qui, étant une extrémité d'un tunnel sécurisé, déchiffre les paquets et les achemine vers le prochain tunnel sécurisé pour qu'ils soient à nouveau chiffrés.

L'utilisation du mécanisme MPLS associé à l'emploi de tunnels sécurisés présente donc des inconvénients car il nécessite de nombreuses opérations de déchiffrement et de chiffrement au sein des enclaves intermédiaires. Cela engendre des problèmes de complexité de mise en oeuvre mais aussi des problèmes de confidentialité, car les flux sécurisés sont déchiffrés dans une enclave qui n'est ni l'enclave source ni l'enclave destination.

La présente invention vise à remédier aux limitations des solutions précitées en proposant un mécanisme d'acheminement de flux chiffrés entre enclaves distantes qui prend en compte les situations où toutes les enclaves ne sont pas directement reliées par un ou plusieurs réseaux de transport.

L'invention adresse également les situations où une connexion directe existe entre deux enclaves mais où cette connexion n'est pas ou plus capable de satisfaire les contraintes associées à certains flux à transmettre.

Dans ces cas de figure, il est nécessaire de mettre en place un système qui permet d'acheminer le trafic en provenance d'une enclave source vers une enclave destination en passant par une ou plusieurs enclaves intermédiaires. Ainsi, l'invention permet, par la mise en oeuvre de mécanismes d'ingénierie de trafic, d'acheminer les flux chiffrés en exploitant au mieux l'ensemble des ressources réseaux disponibles, et d'assurer la qualité de service requise pour des flux définis comme vitaux en cas d'insuffisance ou d'indisponibilité partielle des ressources.

L'invention a pour objet un dispositif d'interconnexion et de routage entre un réseau local enclavé et au moins un réseau de transport caractérisé en ce qu'il comprend :
- des premiers moyens adaptés à sélectionner, pour un flux de communication en provenance dudit réseau local source, au moins un chemin vers le réseau enclavé auquel il est destiné et à associer ce chemin à une valeur de marquage,
- des moyens d'insertion de la valeur de marquage dans un champ d'en-tête des paquets dudit flux,
- des moyens de chiffrement de l'intégralité dudit flux à l'exception desdits champs d'en-tête,
- des seconds moyens adaptés à recevoir un flux chiffré transmis par lesdits premiers moyens ou en provenance d'un autre réseau

local enclavé et à l'aiguiller, sans le déchiffrer, vers le prochain noeud du réseau situé sur le chemin sélectionné, en fonction de la valeur de marquage lue dans le champ d'en-tête desdits paquets,
- une passerelle pour communiquer auxdits seconds moyens, l'association entre la valeur de marquage et l'aiguillage à appliquer en fonction du chemin sélectionné par lesdits premiers moyens. Lesdits premiers moyens sont en outre adaptés à :
   - établir et maintenir au moins un graphe de connectivité de la topologie logique globale du réseau contenant l'ensemble des liens logiques reliant les réseaux locaux enclavés entre eux et au moins une information relative à la qualité de transmission sur lesdits liens,
   - sélectionner le chemin d'accès au réseau enclavé destination à partir desdites informations de qualité et d'au moins une contrainte d'acheminement dudit flux à transmettre, de sorte à respecter cette contrainte,
   - communiquer le chemin sélectionné et la valeur de marquage associée auxdits premiers moyens des autres dispositifs d'interconnexion et de routage situés sur ledit chemin.

Dans une variante de réalisation de l'invention, lesdits seconds moyens sont en outre adaptés à modifier la valeur, associée au chemin sélectionné, du champ d'entête des paquets reçus en provenance d'un réseau de transport.

Dans une variante de réalisation de l'invention, lesdits premiers moyens sont mis en oeuvre par un premier routeur, lesdits seconds moyens sont mis en oeuvre par un second routeur, et la passerelle est réalisée par un canal de communication fourni par les moyens de chiffrement.

Dans une variante de réalisation de l'invention, les réseaux sont des réseaux IP et le champ d'en-tête est le champ DSCP du paquet IP.

Dans une variante de réalisation de l'invention, les moyens de chiffrement mettent en oeuvre le protocole IPSec.

L'invention a également pour objet un procédé d'acheminement d'un flux chiffré dans un réseau comportant une pluralité de réseaux locaux enclavés interconnectés via au moins un réseau de transport caractérisé en ce qu'il consiste, pour acheminer ledit flux chiffré d'un réseau enclavé source vers un réseau enclavé destination, à :
- établir et maintenir au moins un graphe de connectivité de la topologie logique globale dudit réseau contenant l'ensemble des liens logiques reliant les réseaux locaux enclavés entre eux et au moins une information relative à la qualité de transmission sur lesdits liens,
- sélectionner, à partir desdites informations de qualité et d'au moins une contrainte d'acheminement dudit flux, au moins un chemin d'accès au réseau enclavé destination permettant de respecter cette contrainte,
- associer au chemin sélectionné, pour chaque réseau enclavé situé sur ledit chemin, une valeur de marquage et communiquer cette association aux autres réseaux enclavés situés sur ledit chemin,
- insérer cette valeur dans un champ de l'en-tête des paquets dudit flux,
- chiffrer l'intégralité desdits paquets à l'exception dudit champ d'en-tête,
- pour chaque réseau enclavé recevant lesdits paquets chiffrés, déterminer la destination suivante dudit flux par lecture de la valeur dudit champ d'en-tête et interprétation du chemin associé, sans déchiffrement desdits paquets.

Dans une variante de réalisation, le procédé selon l'invention consiste en outre à réserver les ressources disponibles sur ledit chemin d'accès sélectionné, pour la transmission dudit flux.

Dans une variante de réalisation, le procédé selon l'invention consiste en outre, pour chaque réseau enclavé recevant lesdits paquets, à modifier la valeur du champ d'en-tête des paquets par une valeur de marquage spécifique audit réseau enclavé.

Dans une variante de réalisation, lesdites informations de qualité comprennent au moins la bande passante ou le délai ou la gigue ou le taux de pertes de paquets.

Dans une variante de réalisation, lesdites contraintes d'acheminement comprennent au moins des contraintes de qualité de service, des contraintes de criticité du service, des contraintes de priorité ou des contraintes géographiques.

Dans une variante de réalisation, un chemin alternatif est sélectionné en secours du chemin principal.

Dans une variante de réalisation, la sélection dudit chemin d'accès prend en compte une interruption programmée de la connectivité sur au moins un lien fourni par au moins un réseau de transport.

D'autres caractéristiques et avantages de l'invention apparaîtront à l'aide de la description qui suit faite en regard de dessins annexés qui représentent :
- la figure 1, un premier exemple d'architecture réseau composée d'enclaves interconnectées par le biais de plusieurs réseaux de transport,
- la figure 2, un second exemple d'architecture réseau adapté à l'emploi du mécanisme connu MPLS associé à l'utilisation de tunnels sécurisés par exemple via le protocole IPSec,
- la figure 3, une illustration des inconvénients du mécanisme MPLS,
- la figure 4, un second exemple d'architecture réseau illustrant la problématique d'acheminement de flux chiffrés entre deux enclaves distantes,
- la figure 5, un synoptique fonctionnel du dispositif de routage de flux chiffrés selon l'invention,
- la figure 6, un exemple d'architecture réseau adapté pour l'emploi du dispositif et du procédé d'acheminement de flux sécurisés selon l'invention,
- la figure 7, une illustration des avantages de l'invention, notamment vis-à-vis du mécanisme connu MPLS associé à l'utilisation de tunnels sécurisés.

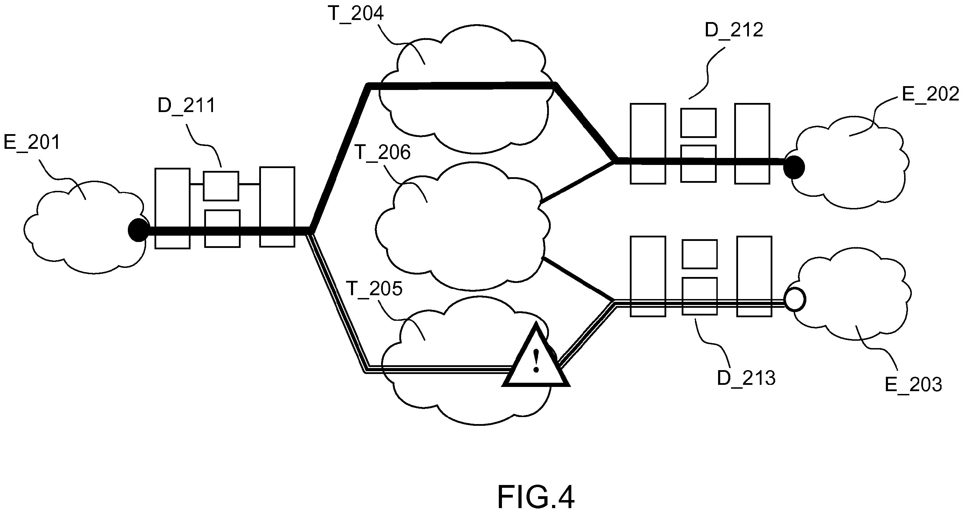

La figure 4 illustre, sur un schéma, la problématique d'acheminement de flux chiffrés d'une enclave à une autre dans une architecture réseau telle que celle présentée à la figure 1.

Un premier réseau local enclavé E_201 est interconnecté avec deux autres réseaux locaux enclavés E_202, E_203 de la façon suivante. Le premier réseau local E_201 est connecté au deuxième réseau local E_202 par l'intermédiaire d'un premier réseau de transport T_204. Le premier réseau local E_201 est également connecté au troisième réseau local E_203 par l'intermédiaire d'un deuxième réseau de transport T_205. Les deuxième et troisième réseaux locaux E_202, E_203 sont connectés par l'intermédiaire d'un troisième réseau de transport T_206.

Pour établir une connexion depuis le premier réseau local E_201 vers le troisième réseau local E_203, le chemin le plus direct consiste à passer par le deuxième réseau de transport T_205. Cependant, la connexion assurée par ce réseau de transport T_205 peut être défaillante, par exemple pour des raisons de perte de connectivité ou de limitation de la bande passante.

Dans ce cas, il est nécessaire de mettre en place un système permettant d'acheminer le trafic en provenance du premier réseau local E_201 vers le troisième réseau local E_203 en le faisant transiter par une ou plusieurs enclaves intermédiaires.

Dans l'exemple de la figure 4, un chemin logique possible consiste à transmettre le flux de trafic vers le premier réseau de transport T_204 à destination du deuxième réseau local E_202, puis vers le troisième réseau de transport T_206 à destination du troisième réseau local E_203.

La figure 4 schématise en outre les dispositifs d'interconnexion et de routage D_211, D_212, D_213, situés entre chaque réseau local et chaque réseau de transport ou groupe de réseaux de transport auquel il est connecté, qui sont nécessaires pour séparer la partie rouge et la partie noire du réseau et qui visent, notamment, à sécuriser, par chiffrement, les flux émis depuis chaque enclave, et respectivement, par déchiffrement, les flux reçus par chaque enclave.

De façon générale, il existe, dans un tel réseau, un besoin d'un mécanisme d'acheminement de flux chiffrés permettant de sélectionner et d'établir le chemin logique le plus adapté à la transmission d'un flux de données, en fonction des contraintes du flux et des caractéristiques de qualité de service offertes par les différents chemins logiques potentiels. L'invention vise à proposer une solution qui répond à ce problème en adaptant les dispositifs d'interconnexion et de routage D_211, D_212, D_213 pour qu'ils mettent en oeuvre un mécanisme d'acheminement de flux chiffrés.

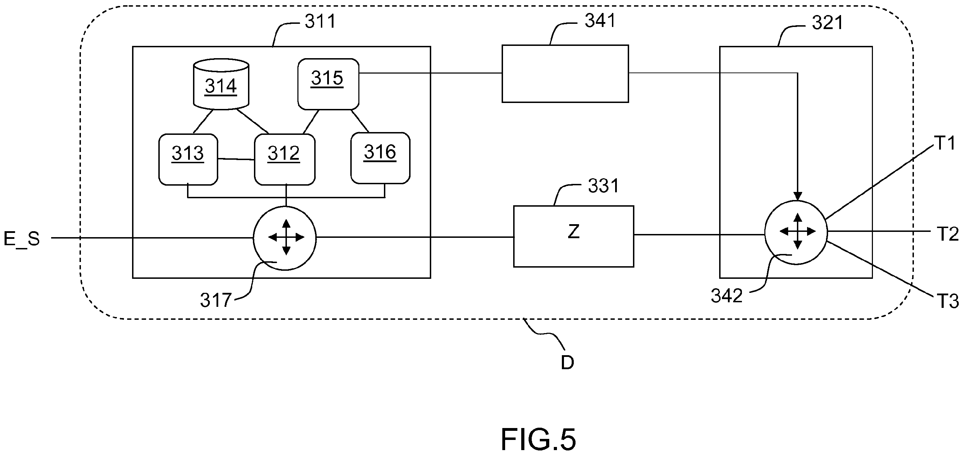

La figure 5 schématise, sur un synoptique fonctionnel, le dispositif d'acheminement de flux chiffrés selon l'invention.

Un tel dispositif D est positionné en sortie de chaque enclave réseau, de façon à assurer une interconnexion entre une enclave E_S et les différents réseaux de transports T1,T2,T3 auxquels elle est connectée, tel que représenté à la figure 4.

Le dispositif D selon l'invention communique avec l'enclave E_S en clair, c'est-à-dire que les flux de données transmis entre le dispositif D et l'enclave E_S ne sont pas sécurisés. Au contraire la communication entre le dispositif D et les réseaux de transport T1,T2,T3 est sécurisée puisque les flux sortants ou entrants du dispositif D et à destination ou en provenance des réseaux de transport T1,T2,T3 sont chiffrés.

Le dispositif D est adapté à mettre en oeuvre un mécanisme de routage permettant l'acheminement, dans des conditions optimales de qualité de service, d'un flux en provenance de l'enclave E_S et à destination d'une enclave distante E_D.

Le dispositif D comprend un premier module 311 d'élaboration d'une décision d'acheminement d'un flux f en provenance de l'enclave E_S et à destination d'une enclave distante E_D. Le premier module 311 communique directement avec l'enclave E_S et est situé dans la partie logique rouge du réseau. Le dispositif D comprend également un module 321 d'interface chargé notamment d'appliquer la décision d'acheminement en faisant transiter le flux en provenance de l'enclave E_S sur le lien de communication et le réseau de transport T1,T2,T3 choisis. Ce module d'interface 321 est situé dans la partie logique noire du réseau. Un dispositif 331 de chiffrement/déchiffrement est situé entre le premier module 311, duquel il reçoit ou auquel il transmet un flux de données en clair, et le module d'interface 321, duquel il reçoit ou auquel il transmet un flux au moins partiellement chiffré. Le dispositif de chiffrement 331 met en oeuvre, par exemple, le protocole de chiffrement IPSec. La méthode de chiffrement mise en oeuvre est adaptée à chiffrer l'intégralité du paquet à l'exception d'au moins un champ de l'entête du paquet servant à apposer un marquage. Une passerelle 341 relie également la partie rouge (module 311) et la partie noire (module 321) du dispositif afin d'assurer un cloisonnement sécurisé des communications entre les deux parties tout en permettant d'informer le module d'interface 321 des choix d'aiguillages déterminés par le premier module 311.

Le module 311 d'élaboration d'une décision d'acheminement est composé de plusieurs sous-fonctions qui interagissent afin d'associer à un flux f à transmettre le chemin logique le plus optimal pour atteindre sa destination en fonction de plusieurs contraintes.

Une première fonction 312 réalise la découverte et la surveillance des liens logiques du réseau dans un voisinage proche de l'enclave E_S et élabore des informations de qualité pour chaque lien qui relie l'enclave E_S à ses enclaves voisines. Par enclaves voisines, on entend les réseaux locaux situés à un bond de l'enclave E_S, c'est-à-dire qui peuvent être atteintes depuis l'enclave E_S en traversant un seul réseau de transport.

Les liens surveillés sont des liens logiques point à point entre deux réseaux locaux interconnectés via un réseau de transport. Les liens logiques sont par exemple constitués de tunnels entre deux réseaux locaux. La découverte des liens logiques est, par exemple, réalisée par la lecture d'éléments de configuration de l'enclave E_S. Les tunnels existants au sein du réseau n'existent que si les deux enclaves associées sont autorisées à monter un tunnel entre elles et sont configurées à cet effet. Un tunnel est considéré comme un lien logique, ou lien dit « overlay », dans la mesure où il est fait abstraction des liens et équipements physiques sous-jacents qui sont traversés pour atteindre l'extrémité d'un tunnel.

La surveillance peut être réalisée selon deux approches. Une surveillance passive consiste à élaborer des informations de qualité en fonction du trafic utile envoyé ou reçu sur chaque lien de communication surveillé. Une surveillance active consiste à sonder le réseau en générant du trafic de sonde dédié à cette surveillance entre enclaves voisines. Ces échanges générés permettent de déterminer des informations de qualité sur les liens de communications. Les informations de qualité incluent notamment la bande passante disponible sur un lien, le délai de transmission, la gigue ou encore le taux de perte de paquets sur ce lien.

Une deuxième fonction 313 assure la diffusion des informations de topologie et de qualité des liens logiques de manière à informer chaque réseau local enclavé de la topologie logique du réseau dans sa globalité et des caractéristiques associées à chaque lien.

A cet effet, la fonction d'échange d'informations 313 transmet vers les enclaves voisines, c'est-à-dire celles qui sont directement connectées à l'enclave présente à travers un lien logique, les caractéristiques des liens logiques dont elle a connaissance.

En outre, la fonction 313 reçoit des informations équivalentes de la part des enclaves voisines. De cette façon, chaque dispositif D associé à chaque enclave peut reconstituer, à partir des informations reçues de ses enclaves voisines après itérations successives, la topologie globale du réseau logique avec les caractéristiques de qualité associées à chaque lien.

Les échanges entre les fonctions 313 de chaque dispositif D du réseau ont lieu à intervalles de temps régulier afin que la connaissance des informations caractérisant chaque lien reste à jour au niveau de chaque enclave.

L'exemple non limitatif suivant permet d'illustrer le rôle de la fonction 313.

Une enclave A est connectée à une enclave B au travers d'un lien logique bénéficiant d'une bande passante de 20 Mbits/s. L'enclave B est elle-même connectée à une enclave C au travers d'une liaison dont la bande passante disponible est égale à 30 Mbits/s. A partir des informations collectées par la fonction de surveillance 312, un message contenant les informations de connectivité et de topologie est généré par la fonction 313 et envoyé aux autres extrémités des liaisons. Un message est ainsi transmis de l'enclave A vers l'enclave B, de l'enclave B vers les enclaves A et C et de l'enclave C vers l'enclave B. Une fois cette étape terminée, l'enclave B a la connaissance complète de la topologie globale du réseau formé par les enclaves A, B et C. Une seconde étape est nécessaire afin de communiquer aux enclaves A et C les informations acquises par l'enclave B.

Alternativement, la diffusion des informations de topologie peut être mise en oeuvre par l'utilisation d'une ou plusieurs enclave(s) dédiée(s) à la fonction de relai pour communiquer les informations vers toutes les enclaves. Dans le cas où plusieurs enclaves relais sont utilisées, chaque enclave relai ne communique les informations de topologie qu'aux enclaves qui dépendent d'elle. Lorsque cette alternative est utilisée, les échanges d'informations réalisés par la fonction 313 ne se font plus entre enclaves voisines, de proche en proche, mais par l'intermédiaire d'une enclave relai qui retransmet ensuite les informations agrégées aux enclaves dont elle a la responsabilité.

Toute autre méthode permettant d'assurer l'échange et la diffusion d'informations de topologie entre enclaves distantes du réseau est compatible avec l'invention.

Les sous-fonctions 312 et 313 du module 311 permettent ainsi de construire et de maintenir, dans la partie rouge de chaque enclave, une vue complète et à jour de la topologie logique du réseau. Cette topologie est matérialisée par un graphe de connectivité de l'ensemble des ressources disponibles au sein du réseau et stockée dans une base de données 314.

Dans une variante de réalisation de l'invention, plusieurs graphes peuvent être stockés et maintenus, chacun représentant la solution optimale selon un ou plusieurs critères particuliers.

Lorsqu'un flux à transmettre depuis l'enclave E_S apparaît, les paquets arrivent dans le module 311 et traversent tout d'abord le module de marquage 317. Ce module a pour fonction d'associer à tous les paquets de ce flux une valeur de marquage X, d'apposer ce marquage dans l'en-tête de chaque paquet, et de transmettre une copie des paquets à une fonction 315 d'analyse et d'élaboration d'une décision d'acheminement. Dans le cas d'une technologie IP, le champ d'en-tête utilisé pour apposer le marquage X peut être le champ DSCP (Differentiated Services Code Point) de l'en-tête IP. Ce champ est codé sur 6 bits, et c'est la seule partie de l'en-tête IP qui reste lisible après chiffrement. Ainsi, ce marquage est un repère qui constitue le seul moyen de reconnaître, dans la partie noire, les paquets appartenant à un flux lorsque qu'ils sont chiffrés. Les paquets originaux sont quant à eux transférés vers le dispositif de chiffrement 331.

L'opération de chiffrement réalisée par la fonction 331 consiste à chiffrer l'intégralité des données des paquets transmis à l'exception d'au moins le champ d'entête précité.

A partir du ou des graphes stockés dans la base de données 314, la fonction 315 de décision analyse la copie des paquets et sélectionne le chemin optimal pour acheminer un flux f vers une enclave destination en fonction des caractéristiques des liens logiques du réseau et des contraintes d'acheminement du flux.

Ces contraintes portent notamment sur la qualité de service associée au flux, c'est-à-dire le débit nécessaire pour transmettre le flux, le délai d'acheminement tolérable, la gigue ou encore le taux de pertes acceptable.

Les contraintes d'acheminement peuvent également porter sur la criticité du service associé au flux à transmettre et la priorité d'acheminement à accorder à ce flux. Des contraintes géographiques peuvent également exister, traduites par exemple par une interdiction de transit par un réseau de transport donné. Enfin des contraintes de coût d'accès aux réseaux de transport, potentiellement différents, peuvent également entrer en compte dans la prise de décision réalisée par la fonction 315.

Deux cas de figures apparaissent lors de l'élaboration d'une décision relative à l'acheminement d'un flux à transmettre.

Si un chemin direct satisfaisant les contraintes d'acheminement du flux existe entre l'enclave source et l'enclave destination, alors ce chemin est choisi. Ce cas de figure ne nécessite aucune signalisation préalable à l'acheminement du flux.

La passerelle 341 permet de communiquer entre les parties rouge et noire pour informer le module d'aiguillage 342 de la correspondance entre le marquage du champ d'entête et la sortie du dispositif D qui doit être utilisée. Les différentes sorties du dispositif D correspondent aux différents liens de communication, chacun étant potentiellement relié à différents réseaux de transport.

Ainsi, lorsque le module d'aiguillage 342 reçoit un paquet de données à transmettre, il assure l'aiguillage du paquet vers la sortie précédemment associée à la valeur lue dans le champ d'entête du paquet, conformément à la décision d'acheminement. Le module d'aiguillage 342 est situé dans la partie noire du réseau et n'a donc pas connaissance des données du paquet qui sont chiffrées, ni de la destination finale du paquet, ni encore du chemin qui sera emprunté pour acheminer ce paquet à sa destination. Ainsi, un cloisonnement sécurisé des échanges entre la partie noire et la partie rouge est réalisé. Seul le champ d'en-tête associé au chemin sélectionné n'est pas chiffré lors de l'étape de chiffrement, ce qui permet un acheminement du paquet vers sa destination sans nécessiter d'accès aux informations chiffrées contenues dans le paquet.

Dans le cas où un chemin direct n'existe pas entre les enclaves source et destination, ou s'il existe mais qu'il ne satisfait pas les contraintes d'acheminement du flux, la décision d'acheminement aboutit à la sélection d'un autre chemin logique, qui nécessite un transit du flux par une ou plusieurs enclaves intermédiaires. Les enclaves intermédiaires traversées doivent alors être configurées de sorte que l'acheminement choisi soit effectivement mis en oeuvre pour le flux considéré.

La fonction 316 a pour rôle de générer et communiquer les messages de signalisation préalables à la transmission d'un flux de communication nécessitant un acheminement par une enclave intermédiaire. Plusieurs variantes de réalisation de cette fonction de signalisation 316 sont possibles.

Dans un premier mode de réalisation, la sélection de la totalité du chemin, composé d'une succession de liens logiques et d'enclaves intermédiaires, est réalisée par la sous-fonction 315 du dispositif D attaché à l'enclave source, émettrice du flux f à transmettre.

Les informations concernant le chemin sélectionné sont associées à la valeur de marquage X précédemment apposée par le module 317.
De la même façon que lorsqu'un chemin direct est sélectionné, le module d'aiguillage 342 du dispositif attaché à l'enclave source est configuré de sorte que les paquets du flux f à transmettre soient envoyés sur le lien permettant d'atteindre la première enclave intermédiaire. Un message de signalisation est ensuite généré et contient les informations nécessaires à l'identification du chemin complet, ainsi que les informations de qualité requise pour le flux et la valeur X de marquage associée.

Le message de signalisation est transmis à la première enclave intermédiaire sur le chemin sélectionné, c'est-à-dire l'enclave voisine de l'enclave source, afin de lui communiquer les informations associées à la valeur de marquage X du champ d'en-tête des paquets qui composent le flux f à transmettre. Sur réception de ce message de signalisation, la fonction 316 de signalisation de cette première enclave intermédiaire (partie rouge) prend connaissance du chemin à associer à la valeur du champ d'en-tête et met à jour une table de correspondance, puis configure le module d'aiguillage 342 pour indiquer l'action d'acheminement à réaliser pour les paquets marqués avec cette valeur X et qui proviennent de l'enclave source.

Cette opération est ensuite répétée de proche en proche pour chaque enclave intermédiaire située sur le chemin sélectionné. Outre la mise en oeuvre de l'acheminement des flux chiffrés, cette signalisation peut également permettre la réservation des ressources nécessaires à cet acheminement.

Les paquets de données chiffrées du flux f sont ensuite transmis vers l'enclave voisine constituant le premier saut du chemin choisi. Ces paquets contiennent à cet effet, dans leur en-tête, l'adresse destination de cette première enclave.

En se référant à l'exemple de la figure 4, les paquets du flux f sont transmis du dispositif D_211 vers le dispositif D_212 de façon sécurisée.

Grâce à l'étape de signalisation effectuée au préalable, la sous-fonction d'aiguillage 342 du dispositif D_212, située dans la partie noire, sait associer la valeur du champ d'en-tête lue dans les paquets chiffrés reçus à un chemin particulier dans le réseau. Ainsi, le dispositif D_212 peut acheminer les paquets vers leur destination finale, à savoir l'enclave E_203, sans qu'il soit nécessaire de les déchiffrer, et donc sans qu'ils n'atteignent la partie rouge du dispositif D_212. Ainsi, une enclave intermédiaire n'est pas en mesure d'intercepter les flux qui ne lui sont pas destinés.

Dans une variante de réalisation de l'invention, la valeur X du champ d'entête peut être modifiée, lors de l'étape de signalisation, par le dispositif D attaché à une enclave intermédiaire. En effet, si, par exemple, cette valeur X est déjà associée à une autre opération, elle peut être modifiée en une nouvelle valeur Y. Il est aussi possible d'imposer que la valeur du champ soit spécifique à chaque enclave. Dans ce cas, chaque dispositif D attaché à chaque enclave intermédiaire associe, pour la même stratégie d'acheminement, une valeur du champ d'en-tête potentiellement différente dont la signification est propre à l'enclave.

Lorsque le flux transmis est reçu par une enclave intermédiaire, c'est la fonction d'aiguillage 342 qui réalise la modification de la valeur du champ d'en-tête. La fonction 342, dans la partie noire du réseau, sait réaliser cette opération de modification du marquage, qui lui a été notifiée par le module de signalisation lors de l'étape de configuration de la partie noire. Ainsi, l'action à opérer lors de la réception de paquets comportant une valeur de marquage X donnée consiste en la modification du marquage et l'acheminement sur le prochain lien constituant le chemin logique.

Dans une autre variante de réalisation de l'invention, le chemin global permettant d'acheminer le flux f de l'enclave source E_201 vers l'enclave destination E_203 n'est pas décidé par le dispositif D attaché à l'enclave source E_201 mais le module de décision de chaque enclave intermédiaire E_202 est sollicité, lors de la phase de signalisation, pour décider, de proche en proche, du meilleur lien logique à sélectionner pour poursuivre l'acheminement des paquets vers leur destination finale.

On décrit à présent le procédé d'acheminement selon l'invention mis en oeuvre pour l'exemple de la figure 4.

Un flux de communication f est émis depuis l'enclave réseau E_201 à destination de l'enclave réseau E_203. Les réseaux de transports T_204,T_205,T_206 sont situés dans la partie noire du réseau. Ainsi, les flux transitant à travers ces différents réseaux de transports doivent être sécurisés afin que l'accès à leur contenu soit rendu impossible.

Le procédé selon l'invention vise à déterminer le chemin optimal permettant d'acheminer le flux f sécurisé vers l'enclave destination en prenant en compte les caractéristiques des différents liens en regard des contraintes associées à ce flux. Il comporte principalement les étapes suivantes exécutées par les dispositifs d'interconnexion et de routage D_211,D_212,D_213 réalisant l'interface entre chaque réseau local enclavé et la partie noire du réseau constituée des différents liens de communication et réseaux de transports.

Le dispositif D_211 attaché à l'enclave source E_201 réalise une découverte du réseau. Il découvre ainsi que l'enclave E_201 est connectée à l'enclave E_202 par l'intermédiaire du réseau de transport T_204 et que le réseau de transport T_205 reliant les enclaves E_201 et E_203 est défaillant.

Il communique ces informations au dispositif D_212 attaché à l'enclave E_202 selon le mécanisme associé à la fonction 312 décrite précédemment. Le dispositif D_212 découvre à son tour que l'enclave E_202 est reliée à l'enclave E_203 par l'intermédiaire du réseau de transport T_206.

De proche en proche et par itérations successives, tous les dispositifs D_211,D_212,D_213 découvrent ou maintiennent leur connaissance de la topologie du réseau ainsi que des caractéristiques de chaque lien de communication. Cette topologie est stockée et maintenue sous la forme d'un ou plusieurs graphes de connectivité dans une base de données 314.

Alternativement, la communication des informations de topologie du réseau est réalisée par le biais d'une ou plusieurs enclaves qui reçoivent l'ensemble des informations pour les diffuser ensuite à l'ensemble des enclaves distantes de manière agrégée.

Le dispositif D_211 effectue ensuite un choix du meilleur chemin permettant d'acheminer le flux f de l'enclave source E_201 vers l'enclave destination E_203. Compte tenu de la défaillance du réseau de transport T_205 qui assure une liaison directe entre ces deux enclaves, le dispositif D_211 sélectionne le chemin indirect passant par le dispositif D_212 de l'enclave E_202.

Une phase de signalisation est ensuite engagée.

Un message de signalisation est généré contenant les informations permettant d'identifier le chemin sélectionné, ses caractéristiques de transmission (bande passante, délai, gigue, taux d'erreurs) et la valeur X de marquage associée à ce chemin. Ce message est transmis, saut par saut, aux enclaves situées sur le chemin sélectionné. A réception du message de signalisation, chaque dispositif de routage D_212 met à jour une table de correspondance entre les valeurs de marquage et le chemin associé, et configure le module d'aiguillage 342 situé dans la partie noire pour réaliser l'acheminement adéquat.

Dans une variante de réalisation, la valeur de marquage X des paquets est spécifique à chaque enclave.

Une fois la phase de signalisation terminée, toutes les enclaves situées sur le chemin sélectionné savent quelle opération d'acheminement effectuer à réception d'un paquet chiffré dont la valeur du champ d'en-tête, par exemple le champ DSCP, correspond à une valeur identifiée dans la table de correspondance. Chaque dispositif d'interconnexion et de routage D_212 achemine alors le paquet chiffré reçu, en fonction de cette valeur de champ d'en-tête, vers la prochaine enclave du chemin identifié grâce à cette valeur, et ainsi de suite jusqu'à ce que le paquet arrive à sa destination. Cette opération est réalisée par le module 321 du dispositif D_212 situé dans la partie noire du réseau, de sorte à acheminer les paquets sans effectuer de déchiffrement. Lorsque le dispositif D_213 reçoit le paquet, le module 321 correspondant sait, du fait de l'absence de correspondance entre la valeur de marquage et une action d'acheminement, que celui-ci est arrivé à sa destination, et peut donc le transmettre au module 331 pour déchiffrement, puis au module de routage 317 qui achève l'acheminement du paquet jusqu'à la destination dans l'enclave E_203.

Dans une variante de réalisation, le chemin global reliant l'enclave source à l'enclave destination n'est pas déterminé totalement par le dispositif de routage attaché à l'enclave source mais est déterminé de proche en proche par chacun des dispositifs de routage attachés à chaque enclave du réseau.

Le dispositif selon l'invention peut être implémenté dans un unique équipement bénéficiant de ressources importantes, ou peut comporter un premier dispositif de routage 311 adapté à la mise en oeuvre des traitements dans la partie rouge du réseau, un second dispositif de routage 321 adapté à la mise en oeuvre des traitements dans la partie noire du réseau et un moyen de chiffrement 331 assurant la liaison entre les deux. La passerelle 341 peut être réalisée par un canal de communication implémenté par le dispositif de chiffrement et dédié à cet effet.

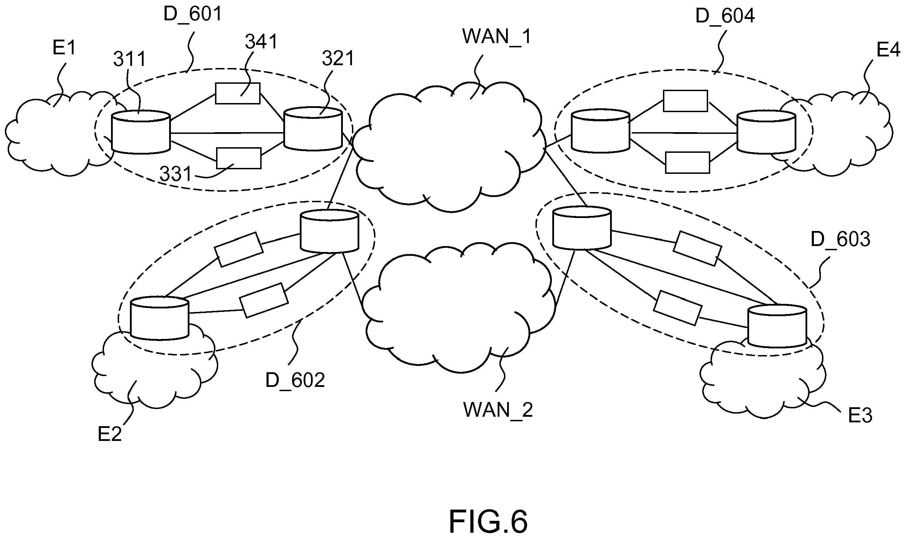

La figure 6 illustre l'emploi du dispositif selon l'invention décrit à la figure 5 pour son application au réseau d'architecture déjà décrit à la figure 2.

Un dispositif d'interconnexion et de routage D_601,D_602,D_603,D_604 est positionné en sortie de chaque réseau enclavé E1,E2,E3,E4 quel que soit le nombre de réseaux de transports WAN_1,WAN_2 auquel il est relié.

Comme indiqué ci-dessus, le dispositif selon l'invention peut être implémenté via un premier dispositif de routage 311 situé dans la partie rouge du réseau et un second dispositif de routage 321 situé dans la partie noire du réseau et n'ayant accès qu'aux flux chiffrés. Le chiffrement 331 est réalisé par exemple à l'aide du protocole IPSec en mode tunnel et une passerelle 341 permet de communiquer entre la partie rouge et la partie noire du réseau pour notamment transmettre les informations nécessaires pour mettre en correspondance le marqueur X de l'entête des paquets avec les règles d'acheminement qui doivent être appliquées par les dispositifs 321 de routage de la partie noire. Autrement dit, cette passerelle 341 autorise le passage d'instructions d'acheminement du plan de routage rouge vers le plan de routage noir. La mise en oeuvre d'une telle passerelle permet de garantir la confidentialité des communications sécurisées même lorsqu'elles transitent par un réseau enclavé intermédiaire. D'autre part, grâce à l'invention, le nombre de tunnels sécurisés à établir est diminué par rapport à l'emploi du mécanisme MPLS décrit à la figure 2. En effet, la présente invention ne nécessite, dans la partie noire du réseau, qu'un seul dispositif de routage 321 par réseau enclavé et non plus un dispositif de routage par réseau enclavé et par réseau de transport.

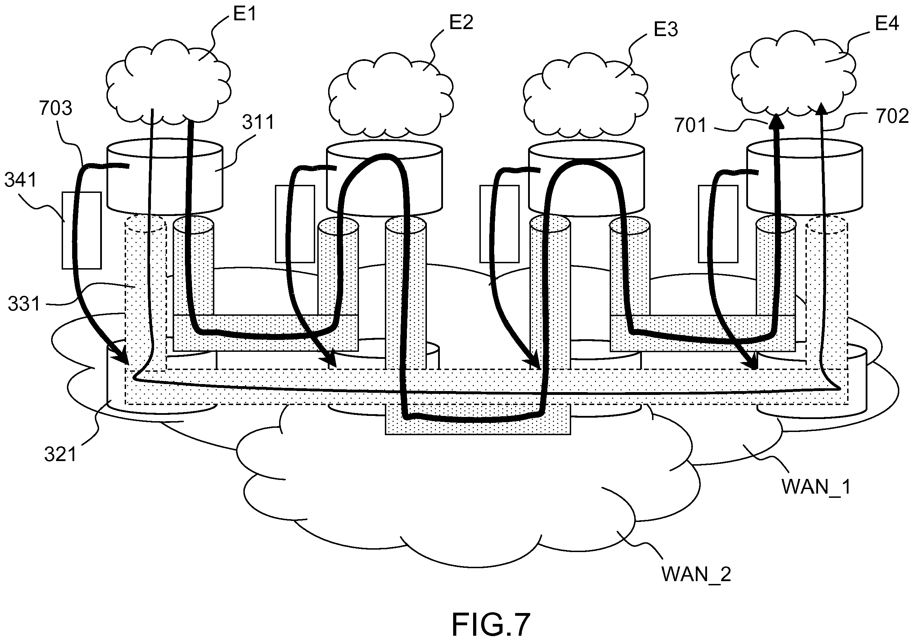

La figure 7 illustre le fonctionnement de l'invention et ses différences avec le mécanisme MPLS combiné à l'utilisation du protocole IPSec pour réaliser le chiffrement.

Un unique tunnel sécurisé existe entre chaque couple de réseaux enclavés source et destination. En particulier, les enclaves E2 et E3 connectées à deux réseaux de transport WAN_1,WAN2 ne nécessitent qu'un seul tunnel IPSec car le dispositif selon l'invention permet la communication dans la partie noire du réseau, d'informations concernant l'acheminement du flux chiffré sans avoir à déchiffrer les paquets reçus en remontant dans la partie rouge du réseau.

Dans l'exemple de la figure 7, pour acheminer un flux de données sécurisé depuis l'enclave source E1 vers l'enclave destination E4 en passant par les enclaves intermédiaires E2,E3, le dispositif de routage 311 de la partie rouge du réseau prend la décision d'acheminement sur la base des informations contenues dans les paquets avant chiffrement. Il met en place l'acheminement adéquat dans le plan de routage rouge par le biais d'une signalisation 701 qui emprunte toujours les tunnels sécurisés en remontant dans la partie rouge de chaque dispositif d'interconnexion selon l'invention. Le trafic de signalisation du plan de routage de la partie rouge reste donc sécurisé. Au niveau de chaque enclave sollicitée par le flux sécurisé, la passerelle 341 du dispositif d'interconnexion et de routage selon l'invention permet la communication 703 d'instructions d'acheminement du plan de routage rouge vers le plan de routage noir. Les paquets de données chiffrés sont, à partir de ces instructions, commutés vers la prochaine enclave intermédiaire ou vers l'enclave destination, en se maintenant dans la partie noire du réseau c'est-à-dire sans déchiffrer les données transmises à aucun moment. Le pilotage du plan de routage noir par le plan de routage rouge grâce aux passerelles 341 évite ainsi les opérations de déchiffrement, routage et chiffrement des paquets à chaque enclave intermédiaire. Les communications 702 restent sécurisées puisqu'elles n'empruntent qu'un seul tunnel de chiffrement qui relie l'enclave source à l'enclave destination. Dans l'exemple de la figure 7, le flux sécurisé en provenance de l'enclave E1 et à destination de l'enclave E4 transite via le tunnel sécurisé 331, par exemple établi grâce au protocole IPSec. Ce tunnel sécurisé passe par chaque dispositif de routage de la partie noire du réseau situé sur le chemin sélectionné. L'acheminement se fait de saut en saut grâce aux informations communiquées via les passerelles sécurisées 341.

Grâce à l'invention, des flux sécurisés initialement acheminés entre deux enclaves directement connectées peuvent être redirigés via des enclaves intermédiaires lorsqu'un problème survient sur une liaison directe. Les évènements susceptibles de déclencher ce mécanisme de redirection peuvent être des pertes de connectivité dans le réseau d'opérateur assurant cette liaison directe, mais également des dégradations de performances, ces événements étant détectés grâce au module de surveillance 312 du dispositif selon l'invention.

L'invention a pour avantage de permettre l'acheminement de flux sécurisés entre deux enclaves distantes en passant par une ou plusieurs enclaves intermédiaires sans qu'il soit nécessaire de les déchiffrer lors de leur transit. Les mécanismes mis en oeuvre par l'invention, en particulier le cloisonnement entre partie rouge et noire du dispositif d'interconnexion et de routage selon l'invention, permettent de réaliser une stratégie d'acheminement optimale tout en conservant un haut degré de sécurisation du flux lors de son transit par les différentes entités situées sur son chemin.

Lorsqu'une redirection a lieu, les ressources nécessaires à l'acheminement de l'ensemble des flux redirigés ne sont pas forcément disponibles. Dans ce cas une fonction de préemption permet d'acheminer une partie du trafic seulement, en donnant la priorité aux flux dont la criticité est élevée.

L'invention permet également de mettre en oeuvre un mécanisme de protection et de restauration. Lorsqu'un chemin est sélectionné, il est possible de prévoir et d'établir un chemin alternatif de secours sur lequel des flux, en particulier des flux critiques, peuvent être instantanément redirigés en cas de problème sur le chemin utilisé initialement.

De plus, dans le cas où une interruption de la connectivité fournie par un réseau de transport est prévue, par exemple pour des raisons de maintenance, l'invention permet de mettre en oeuvre un mécanisme de type « Make before Break » qui consiste à établir un autre chemin et à rediriger les flux sur ce chemin avant même que l'interruption n'ait lieu.

L'invention s'applique à tout réseau d'infrastructure nécessitant un haut degré de sécurisation et de résilience.

### Références

[1] A. Akella et al., « On The Perfomance Benefits of Multihoming Route Control », IEEE/ACM Transactions on Networking, vol. 16 (1), 2008, p. 91-104.
[2] D. G. Andersen et al., « Resilient Overlay Networks », in Proceedings of the 18th ACM Symposium on Operating Systmes Principles (SOSP'01), 2001, p. 131-145.

## Revendications

1. Dispositif (D) d'interconnexion et de routage entre un réseau local enclavé (E_201) et au moins un réseau de transport (T_204,T_205,T_206) comprenant:
• des premiers moyens (311) adaptés à sélectionner, pour un flux de communication en provenance dudit réseau local (E_201) source, au moins un chemin vers le réseau enclavé (E_203) auquel il est destiné et à associer ce chemin à une valeur de marquage (X),
• des moyens (317) d'insertion de la valeur de marquage (X) dans un champ d'en-tête des paquets dudit flux,
• des moyens de chiffrement (331) de l'intégralité dudit flux à l'exception desdits champs d'en-tête,
• des seconds moyens (321) adaptés à recevoir un flux chiffré transmis par lesdits premiers moyens (311) ou en provenance d'un autre réseau local enclavé (E_201,E_202) et à l'aiguiller, sans le déchiffrer, vers le prochain noeud du réseau situé sur le chemin sélectionné, en fonction de la valeur de marquage (X) lue dans le champ d'en-tête desdits paquets, une passerelle (341) pour communiquer auxdits seconds moyens (321), l'association entre la valeur de marquage (X) et l'aiguillage à appliquer en fonction du chemin sélectionné par lesdits premiers moyens (311), dudit dispositif (D), lesdits premiers moyens (311) étant en outre configurés pour:
• établir et maintenir (312,313) au moins un graphe de connectivité (314) de la topologie logique globale du réseau contenant l'ensemble des liens logiques reliant les réseaux locaux enclavés entre eux et au moins une information relative à la qualité de transmission sur lesdits liens,
• sélectionner (315) le chemin d'accès au réseau enclavé destination (E_203) à partir desdites informations de qualité et d'au moins une contrainte d'acheminement dudit flux à transmettre, de sorte à respecter cette contrainte,
• communiquer (316) le chemin sélectionné et la valeur de marquage (X) associée auxdits premiers moyens (311) des autres dispositifs d'interconnexion et de routage situés sur ledit chemin.

2. Dispositif (D) selon la revendication 1 **caractérisé en ce que** lesdits seconds moyens (342) sont en outre configurés pour modifier la valeur, associée au chemin sélectionné, du champ d'entête des paquets reçus en provenance d'un réseau de transport.

3. Dispositif (D) selon l'une des revendications précédentes **caractérisé en ce que** lesdits premiers moyens (311) sont mis en oeuvre par un premier routeur, lesdits seconds moyens (321) sont mis en oeuvre par un second routeur, et la passerelle (341) est réalisée par un canal de communication fourni par les moyens de chiffrement (331).

4. Dispositif (D) selon l'une des revendications précédentes **caractérisé en ce que** les réseaux sont des réseaux IP et le champ d'en-tête est le champ DSCP du paquet IP.

5. Dispositif (D) selon la revendication 4 **caractérisé en ce que** les moyens de chiffrement (331) mettent en oeuvre le protocole IPSec.

6. Procédé d'acheminement d'un flux chiffré (f) dans un réseau comportant une pluralité de réseaux locaux enclavés (E_201, E_202, E_203) interconnectés via au moins un réseau de transport (T_204,T_205,T_206) pour acheminer ledit flux chiffré d'un réseau enclavé source (E_201) vers un réseau enclavé destination (E_203), ledit procédé consistant à :
• établir et maintenir (312,313) au moins un graphe de connectivité (314) de la topologie logique globale dudit réseau contenant l'ensemble des liens logiques reliant les réseaux locaux enclavés entre eux et au moins une information relative à la qualité de transmission sur lesdits liens,
• sélectionner (315), à partir desdites informations de qualité et d'au moins une contrainte d'acheminement dudit flux (f), au moins un chemin d'accès au réseau enclavé destination (E_203) permettant de respecter cette contrainte,
• associer au chemin sélectionné, pour chaque réseau enclavé situé sur ledit chemin, une valeur de marquage (X) et communiquer (316) cette association aux autres réseaux enclavés situés sur ledit chemin,
• insérer cette valeur (X) dans un champ de l'en-tête des paquets dudit flux (f),
• chiffrer (331) l'intégralité desdits paquets à l'exception dudit champ d'en-tête,
• pour chaque réseau enclavé recevant lesdits paquets chiffrés, déterminer la destination suivante dudit flux (f) par lecture de la valeur dudit champ d'en-tête et interprétation du chemin associé, sans déchiffrement desdits paquets.

7. Procédé d'acheminement selon la revendication 6 dans lequel ledit réseau comporte une pluralité de réseaux locaux enclavés (E_201, E_202, E_203) interconnectés via une pluralité de réseaux de transport (T_204,T_205,T_206), ledit chemin d'accès au réseau enclavé destination (E_203) étant composé d'une succession de liens logiques et de réseaux enclavés intermédiaires,

8. Procédé d'acheminement selon l'une des revendications 6 ou 7 **caractérisé en ce qu'**il consiste en outre à réserver les ressources disponibles sur ledit chemin d'accès sélectionné, pour la transmission dudit flux.

9. Procédé d'acheminement selon l'une des revendications 6 à 8 **caractérisé en ce qu'**il consiste en outre, pour chaque réseau enclavé recevant lesdits paquets, à modifier la valeur du champ d'en-tête des paquets par une valeur de marquage (Y) spécifique audit réseau enclavé.

10. Procédé d'acheminement selon l'une des revendications 6 à 9 **caractérisé en ce que** lesdites informations de qualité comprennent au moins la bande passante ou le délai ou la gigue ou le taux de pertes de paquets.

11. Procédé d'acheminement selon l'une des revendications 6 à 10 **caractérisé en ce que** lesdites contraintes d'acheminement comprennent au moins des contraintes de qualité de service, des contraintes de criticité du service, des contraintes de priorité ou des contraintes géographiques.

12. Procédé d'acheminement selon l'une des revendications 6 à 11 **caractérisé en ce qu'**un chemin alternatif est sélectionné (315) en secours du chemin principal.

13. Procédé d'acheminement selon l'une des revendications 6 à 12 **caractérisé en ce que** la sélection (315) dudit chemin d'accès prend en compte une interruption programmée de la connectivité sur au moins un lien fourni par au moins un réseau de transport.

## Patentansprüche

1. Vorrichtung (D) zum Verbinden und Routen zwischen einem geschlossenen LAN (E_201) und wenigstens einem Transportnetz (T_204, T_205, T_206), die Folgendes umfasst:
erste Mittel (311) zum Wählen, für einen von der LAN-Quelle (E_201) kommenden Kommunikationsfluss, wenigstens eines Pfades zu dem geschlossenen LAN (E_203), für das er bestimmt ist, und zum Assoziieren dieses Pfades mit einem Markierungswert (X),
Mittel (317) zum Einsetzen des Markierungswertes (X) in ein Kopffeld der Pakete des Flusses,
Mittel (331) zum Verschlüsseln der Integrität des Flusses mit Ausnahme der Kopffelder,
zweite Mittel (321) zum Empfangen eines verschlüsselten Flusses, der von den ersten Mitteln (311) gesendet wurde oder von einem anderen geschlossenen LAN (E_201, E_202) kommt, und Schalten desselben, ohne ihn zu entschlüsseln, zum nächsten Knoten des Netzes, der sich auf dem gewählten Pfad befindet, in Abhängigkeit von dem im Kopffeld der Pakete gelesenen Markierungswert (X),
ein Gateway (341), um den zweiten Mitteln (321) die Assoziation zwischen dem Markierungswert (X) und der Schaltung zu kommunizieren, die in Abhängigkeit von dem gewählten Pfad durch die ersten Mittel (311) der Vorrichtung (D) anzuwenden ist,
wobei die ersten Mittel (311) ferner konfiguriert sind zum:
Erstellen und Führen (312, 313) wenigstens einer Konnektivitätsgraphik (314) der globalen Logiktopologie des Netzes, die den Satz von logischen Verbindungen enthält, die die geschlossenen LANs untereinander verbinden, und wenigstens einer Information in Bezug auf die Sendequalität auf den Verbindungen,
Wählen (315) des Zugangspfades zu dem geschlossenen Ziel-LAN (E_203) auf der Basis der Qualitätsinformationen und wenigstens einer Leitwegbeschränkung des zu sendenden Flusses, um diese Beschränkung einzuhalten,
Kommunizieren (316) des gewählten Weges und des assoziierten Markierungswertes (X) zu den ersten Mitteln (311) der anderen Verbindungs- und Routing-Vorrichtungen, die sich auf dem Pfad befinden.

2. Vorrichtung (D) nach Anspruch 1, **dadurch gekennzeichnet, dass** die zweiten Mittel (342) ferner zum Modifizieren des mit dem gewählten Weg assoziierten Wertes des Kopffeldes der von einem Transportnetz kommenden empfangenen Pakete konfiguriert sind.

3. Vorrichtung (D) nach einem der vorherigen Ansprüche, **dadurch gekennzeichnet, dass** die ersten Mittel (311) von einem ersten Router implementiert werden, wobei die zweiten Mittel (321) von einem zweiten Router implementiert werden und das Gateway (341) von einem mit den Verschlüsselungsmitteln (331) ausgestatteten Kommunikationskanal realisiert wird.

4. Vorrichtung (D) nach einem der vorherigen Ansprüche, **dadurch gekennzeichnet, dass** die Netze IP-Netze sind und das Kopffeld das DSCP-Feld des IP-Pakets ist.

5. Vorrichtung (D) nach Anspruch 4, **dadurch gekennzeichnet, dass** die Verschlüsselungsmittel (331) das IPSec-Protokoll implementieren.

6. Verfahren zum Leiten eines verschlüsselten Flusses (f) in einem Netz, das mehrere geschlossene LANs (E_201, E_202, E_203) umfasst, die über wenigstens ein Transportnetz (T_204, T_205, T_206) verbunden sind, um den verschlüsselten Fluss eines geschlossenen Quell-LAN (E_201) zu einem geschlossenen Ziel-LAN (E_203) zu befördern, wobei das Verfahren besteht aus:
Errichten und Führen (312, 313) wenigstens einer Konnektivitätsgraphik (314) der globalen Logiktopologie des Netzes, das den Satz von logischen Verbindungen enthält, die die geschlossenen LANs untereinander verbinden, und wenigstens einer Information in Bezug auf die Sendequalität auf den Verbindungen,
Auswählen (315), auf der Basis der Qualitätsinformationen und von wenigstens einer Leitwegbeschränkung des Flusses (f), wenigstens eines Zugangspfades zu dem geschlossenen Ziel-LAN (E_203), der die Einhaltung dieser Beschränkung zulässt,
Assoziieren mit dem gewählten Pfad, für jedes auf dem Pfad befindliche geschlossene Netz, eines Markierungswertes (X), und Kommunizieren (316) dieser Assoziation zu den auf dem Pfad befindlichen geschlossenen anderen Netzen,
Einsetzen dieses Wertes (X) in ein Kopffeld der Pakete des Flusses (f),
Verschlüsseln (331) der Integrität der Pakete mit Ausnahme des Kopffeldes, Bestimmen, für jedes die verschlüsselten Pakete empfangende geschlossene Netz, des Ziels gemäß dem Fluss (f) durch Lesen des Wertes des Kopffeldes und Interpretieren des assoziierten Pfads, ohne die Pakete zu entschlüsseln.

7. Leitverfahren nach Anspruch 6, in dem das Netz mehrere geschlossene LANs (E_201, E_202, E_203) umfasst, verbunden über mehrere Transportnetze (T_204, T_205, T_206), wobei der Zugangspfad zu dem geschlossenen Ziel-LAN (E_203) aus einer Folge von logischen Verbindungen und von geschlossenen Zwischennetzen zusammengesetzt ist.

8. Leitverfahren nach Anspruch 6 oder 7, **dadurch gekennzeichnet, dass** es ferner darin besteht, die auf dem gewählten Zugangspfad verfügbaren Ressourcen für die Übertragung des Flusses zu reservieren.

9. Leitverfahren nach einem der Ansprüche 6 bis 8, **dadurch gekennzeichnet, dass** es ferner, für jedes die Pakete empfangende geschlossene Netz, das Modifizieren des Wertes des Kopffeldes der Pakete mit einem für das geschlossene Netz spezifischen Markierungswert (Y) beinhaltet.

10. Leitverfahren nach einem der Ansprüche 6 bis 9, **dadurch gekennzeichnet, dass** die Qualitätsinformationen wenigstens das Passband oder die Laufzeit oder das Jittern oder die Paketverlustrate umfassen.

11. Leitverfahren nach einem der Ansprüche 6 bis 10, **dadurch gekennzeichnet, dass** die Leitwegbeschränkungen wenigstens Servicequalitätsbeschränkungen, Beschränkungen der Kritikalität des Service, Prioritätsbeschränkungen oder geografische Beschränkungen umfassen.

12. Leitverfahren nach einem der Ansprüche 6 bis 11, **dadurch gekennzeichnet, dass** ein alternativer Pfad als Nothilfe für den Hauptpfad gewählt (315) wird.

13. Leitverfahren nach einem der Ansprüche 6 bis 12, **dadurch gekennzeichnet, dass** die Wahl (315) des Zugangspfades eine programmierte Unterbrechung der Konnektivität auf wenigstens einer von wenigstens einem Transportnetz bereitgestellten Verbindung berücksichtigt.

## Claims

1. Device (D) for interconnection and routing between a local network enclave (E_201) and at least one transport network (T_204, T_205, T_206) comprising:
first means (311) which are suitable for selecting, for a communication flow originating from the local source network (E_201), at least one path towards the network enclave (E_203) for which it is intended and for associating this path with a marking value (X),
means (317) for insertion of the marking value (X) in a header field of the packets of the flow,
means (331) for encrypting all the flow with the exception of the header fields,
second means (321) which are suitable for receiving an encrypted flow which is transmitted by the first means (311) or which originates from another local network enclave (E_201, E_202) and switching it, without decrypting it, to the next node of the network located on the selected path, in accordance with the marking value (X) read in the header field of the packets,
a gateway (341) for communicating to the second means (321) the association between the marking value (X) and the switching to be applied in accordance with the path selected by the first means (311) of the device (D),
the first means (311) being further configured to:
establish and maintain (312, 313) at least one connectivity graph (314) of the overall logic topology of the network which contains all the logical links which connect the local network enclaves to each other and at least one item of information relating to the quality of transmission over the links,
selecting (315) the access path to the destination network enclave (E_203) from the information relating to quality and at least one routing constraint of the flow to be transmitted in order to comply with this constraint,
communicating (316) the path selected and the marking value (X) associated with the first means (311) of the other interconnection and routing devices located on the path.

2. Device (D) according to claim 1, **characterised in that** the second means (342) are further configured to modify the value, associated with the path selected, of the header field of the packets received from a transport network.

3. Device (D) according to either of the preceding claims, **characterised in that** the first means (311) are implemented by a first router, the second means (321) are implemented by a second router, and the gateway (341) is produced by means of a communication channel supplied by the encryption means (331).

4. Device (D) according to any one of the preceding claims, **characterised in that** the networks are IP networks and the header field is the DSCP field of the IP packet.

5. Device (D) according to claim 4, **characterised in that** the encryption means (331) use the IPSec protocol.

6. Routing method for an encrypted flow (f) in a network comprising a plurality of local network enclaves (E_201, E_202, E_203) which are interconnected via at least one transport network (T_204, T_205, T_206) in order to route the encrypted flow from a source network enclave (E_201) to a destination network enclave (E_203), the method involving:
establishing and maintaining (312, 313) at least one connectivity graph (314) of the overall logic topology of the network which contains all the logical links which connect the local network enclaves to each other and at least one item of information relating to the quality of transmission over the links,
selecting (315), from the information relating to quality and at least one routing constraint of the flow (f), at least one access path to the destination network enclave (E_203) which enables this constraint to be complied with,
associating with the path selected, for each network enclave located on the path, a marking value (X) and communicating (316) this association to the other network enclaves located on the path,
inserting this value (X) in a header field of the packets of the flow (f),
encrypting (311) all the packets with the exception of the header field,
for each network enclave which receives the encrypted packets, determining the following destination of the flow (f) by reading the value of the header field and interpreting the associated path without decrypting the packets.

7. Routing method according to claim 6, wherein the network comprises a plurality of local network enclaves (E_201, E_202, E_203) which are interconnected via a plurality of transport networks (T_204, T_205, T-206), the access path to the destination network enclave (E_203) being composed of a succession of logical links and intermediate network enclaves.

8. Routing method according to either claim 6 or 7, **characterised in that** it further involves reserving the resources available in the selected access path for the transmission of the flow.

9. Routing method according to any one of claims 6 to 8, **characterised in that** it further involves, for each network enclave which receives the packets, modifying the value of the header field of the packets by a marking value (Y) which is specific to the network enclave.

10. Routing method according to any one of claims 6 to 9, **characterised in that** the items of quality information comprise at least the bandwidth or the delay or the jitter or the packet loss rate.

11. Routing method according to any one of claims 6 to 10, **characterised in that** the routing constraints comprise at least constraints relating to quality of service, constraints relating to criticality of service, priority constraints or geographic constraints.

12. Routing method according to any one of claims 6 to 11, **characterised in that** an alternative path is selected (315) in support of the main path.

13. Routing method according to any one of claims 6 to 12, **characterised in that** the selection (315) of the access path takes into account a programmed interruption of the connectivity on at least one link which is supplied by at least one transport network.
